# EUROPÄISCHE PATENTSCHRIFT

(11) **EP 3 650 163 B1**
(45) Veröffentlichungstag und Bekanntmachung des Hinweises auf die Patenterteilung: **27.10.2021**
(21) Anmeldenummer: 19198527.4
(22) Anmeldetag: 20.09.2019
(51) Int. Cl.: B23K 26/08, B23K 26/38, B23K 26/70, B23K 37/02, B23K 37/04, B23K 10/00, B26D 7/20, B26F 1/38, B26F 3/00, B23Q 1/70, B23K 101/18

(54) **MASCHINE ZUM TRENNENDEN BEARBEITEN EINES PLATTENFÖRMIGEN WERKSTÜCKS UND VERFAHREN ZUM BEWEGEN MINDESTENS EINES UNTERSTÜTZUNGSSCHLITTENS AN DIESER MASCHINE**
MACHINE FOR THE SPLITTING OF A PLATE-SHAPED WORKPIECE, AND METHOD OF MOVING AT LEAST ONE SUPPORTING CARRIAGE ON THIS MACHINE
MACHINE D'USINAGE PAR SÉPARATION D'UNE PIÈCE EN FORME DE PLAQUE ET MÉTHODE DE DÉPLACEMENT D'UN CHARIOT SUPPORT DANS CETTE MACHINE

(30) Priorität: 12.10.2018 DE 102018217487
(43) Veröffentlichungstag der Anmeldung: 13.05.2020
(73) Patentinhaber: TRUMPF Werkzeugmaschinen GmbH + Co. KG, 71254 Ditzingen (DE)
(72) Erfinder: LACHNER, Florian, 71397 Leutenbach (DE); RAICHLE, Florian, 71522 Backnang (DE)
(74) Vertreter: Kohler Schmid Möbus Patentanwälte

(56) Entgegenhaltungen:
- DE-A1-102013 226 818
- DE-A1-102013 226 821
- DE-A1-102015 204 562

## Beschreibung

Die vorliegende Erfindung betrifft eine Maschine zum trennenden Bearbeiten eines plattenförmigen Werkstücks mittels eines Bearbeitungsstrahls, mit: einer ersten Bewegungseinrichtung zur Bewegung des Werkstücks in einer ersten Richtung, einer zweiten Bewegungseinrichtung zur Bewegung eines den Bearbeitungsstrahl auf das Werkstück ausrichtenden Bearbeitungskopfs in einer zweiten, zur ersten senkrechten Richtung, zwei Werkstückauflageflächen zur Auflage des Werkstücks, zwischen denen ein sich entlang der zweiten Richtung erstreckender Spalt gebildet ist, wobei innerhalb des Spalts mindestens ein, bevorzugt mindestens zwei in der zweiten Richtung verfahrbare Unterstützungsschlitten mit einer Auflagefläche zur Unterstützung von beim trennenden Bearbeiten geschnittenen Werkstücken angeordnet sind, und wobei der mindestens eine Unterstützungsschlitten in Schwerkraftrichtung verfahrbar ist. Die Erfindung betrifft auch ein Verfahren zum Bewegen mindestens eines Unterstützungsschlittens an einer solchen Maschine. Eine solche Maschine zum trennenden Bearbeiten eines plattenförmigen Werkstücks mittels eines Bearbeitungsstrahls ist beispielsweise aus der DE10201322681 8A1 (Basis für den Oberbegriff der Ansprüche 1 und 4.), der DE102013226816A1 oder der DE102015204562A1 bekannt geworden. Beim Bearbeiten des plattenförmigen Werkstücks wird dieses von dem bzw. von den verfahrbaren Unterstützungsschlitten unterstützt. Hierbei muss sichergestellt werden, dass die Auflagefläche des bzw. der Unterstützungsschlitten das plattenförmige Material einerseits nicht verkratzt, andererseits ausreichend unterstützt.

Für die prozesssichere Laserbearbeitung an einer in der DE102013226818A1, der DE102013226816A1 bzw. in der DE102015204562A1 beschriebenen Maschine ist daher eine möglichst eben eingestellte Werkstückauflage erforderlich. Die Werkstückauflageflächen der Unterstützungsschlitten, die beispielsweise in Form einer flächigen Auflage, Bürstenauflage oder Kugelauflage ausgebildet sein können, müssen mit den feststehenden Werkstückauflageflächen der Maschine, die ebenfalls durch eine Bürsten- oder Kugelauflage gebildet sein können, fluchten, d.h. mit diesen eine gemeinsame Werkstücklagerungs-Ebene bilden.

In der DE102013226818A1 ist beschrieben, dass vor dem Freischneiden eines Werkstückteils die beiden Unterstützungsschlitten in dem Spalt aufeinander zu bewegt werden, wobei während der Bewegung aufeinander zu die Auflageflächen der beiden Unterstützungsschlitten unter die von den Werkstückauflageflächen gebildete Auflageebene des Werkstücks abgesenkt werden, um eine Berührung der Unterseite des Werkstücks und ein Verkratzen zu verhindern. Um einen durch das Anheben der Auflageflächen auf das Niveau der Werkstückauflageflächen bedingten Zeitverlust zu vermeiden, kann der Bewegung der Unterstützungsschlitten in Y-Richtung eine Bewegung in Z-Richtung überlagert werden.

### Aufgabe der Erfindung

Der vorliegenden Erfindung stellt sich die Aufgabe, eine Maschine der eingangs genannten Art sowie ein Verfahren zum Bewegen mindestens eines Unterstützungsschlittens so zu verbessern, dass einerseits eine gute Unterstützung des Werkstücks durch den mindestens einen Unterstützungsschlitten erreicht und andererseits eine Beschädigung der Werkstückunterseite durch den mindestens einen Unterstützungsschlitten vermieden wird.

### Gegenstand der Erfindung

Diese Aufgabe wird erfindungsgemäß gelöst durch eine Bearbeitungsmaschine der eingangs genannten Art, die eine Steuerungseinrichtung aufweist, die ausgebildet bzw. programmiert ist, während der Bewegung des mindestens einen Unterstützungsschlittens in der zweiten Richtung die Auflagefläche des Unterstützungsschlittens gesteuert an eine vorgegebene, insbesondere ortsunabhängige (konstante) Position in Schwerkraftrichtung zu verfahren, an der die Auflagefläche bevorzugt mit den beiden Werkstückauflageflächen fluchtet.

In der Praxis hat sich gezeigt, dass ein Parallelitätsfehler bei der Verfahrbewegung des/der Unterstützungsschlitten entlang des zwischen den feststehenden Werkstückauflageflächen gebildeten Spalts mechanisch nicht mit vertretbarem Aufwand vermieden werden kann. Dieser Parallelitätsfehler hat eine über den Arbeitsraum variierende Positionierung des/der Unterstützungsschlitten und damit der Auflageflächen des/der Unterstützungsschlitten zur Folge. Mit anderen Worten variiert die Position der Auflagefläche in Schwerkraftrichtung (in Z-Richtung) beim Bewegen des Unterstützungsschlittens ortsabhängig, d.h. die Position der Auflagefläche in Z-Richtung variiert in Abhängigkeit von der Position des Unterstützungsschlittens in der zweiten Richtung (Y-Richtung). Um den Parallelitätsfehler zu korrigieren, wird erfindungsgemäß vorgeschlagen, der Bewegung des Unterstützungsschlittens in Y-Richtung eine gesteuerte Verfahrbewegung in Z-Richtung zu überlagern. Zu diesem Zweck wird eine Steuerungseinrichtung verwendet, die ausgebildet ist, die Bewegung des Werkstücks, des Bearbeitungskopfs und des mindestens einen Unterstützungsschlittens zu steuern bzw. zu koordinieren.

Der Betrag, um den die Position der Auflagefläche in Z-Richtung korrigiert werden muss, um diese unabhängig von der Y-Position des Unterstützungsschlittens stets fluchtend zu den beiden Werkstückauflageflächen auszurichten, variiert in Abhängigkeit von der Position des Unterstützungsschlittens in Y-Richtung. Unter einer fluchtenden Position der Auflagefläche mit den beiden Werkstückauflageflächen wird verstanden, dass die Werkstückauflageflächen und die Auflagefläche des/der Unterstützungsschlitten in einer gemeinsamen Ebene liegen.

Bei einer Ausführungsform ist die Steuerungseinrichtung ausgebildet, die gesteuerte Bewegung der Auflagefläche anhand eines vorab ermittelten Zusammenhangs zwischen einer (ortsabhängig variierenden) Position der Auflagefläche in Schwerkraftrichtung und der Position des Unterstützungsschlittens in der zweiten Richtung vorzunehmen. Wie weiter oben beschrieben wurde, variiert die Position der Auflagefläche bzw. des Unterstützungsschlittens in Z-Richtung bei der Verfahrbewegung in Y-Richtung aufgrund des Parallelitätsfehlers geringfügig, wenn dieser Verfahrbewegung keine zusätzliche, gesteuerte Bewegung in Z-Richtung überlagert wird. Der für die Steuerung in Z-Richtung erforderliche Zusammenhang zwischen der Z-Position der Auflagefläche und der Y-Position des Unterstützungsschlittens wird vorab bestimmt, genauer gesagt vorab vermessen.

Bei einer Weiterbildung umfasst die Maschine eine Speichereinrichtung, in welcher der Zusammenhang zwischen der Position der Auflagefläche in Schwerkraftrichtung und der Position des Unterstützungsschlittens in der zweiten Richtung gespeichert ist. Der Zusammenhang kann in Form einer Kennlinie in der Speichereinrichtung hinterlegt sein, beispielsweise in Form einer Tabelle oder dergleichen. Die Steuerungseinrichtung greift für die gesteuerte Verfahrbewegung des Unterstützungsschlittens in Z-Richtung auf die Speichereinrichtung zu, um an einer jeweiligen Position des Unterstützungsschlittens in Y-Richtung einen geeigneten Betrag für die gesteuerte Bewegung in Z-Richtung einzustellen, so dass insbesondere die Z-Position konstant bleibt.

Bei einer weiteren Ausführungsform umfasst die Maschine eine Abstandsmesseinrichtung zur Bestimmung oder zur Regelung eines Abstands zwischen einer Sensorelektrode und der Auflagefläche mindestens eines Unterstützungsschlittens in Schwerkraftrichtung, wobei die Sensorelektrode bevorzugt eine Bearbeitungsdüse des Bearbeitungskopfs bildet. Die Abstandsmess- bzw. Regeleinrichtung kann beispielsweise wie in der DE102010039528A1 oder in der EP1684046B1 beschrieben ausgebildet sein, die durch Bezugnahme in ihrer Gesamtheit zum Inhalt dieser Anmeldung gemacht werden. Für die Messung bzw. Regelung wird typischerweise eine Kapazität zwischen der (metallischen) Sensorelektrode und der (metallischen) Auflagefläche, genauer gesagt einem metallischen Teilbereich der Auflagefläche, bestimmt, ggf. kann die Abstandsmesseinrichtung aber auch ausgebildet sein, eine induktive Abstandsmessung vorzunehmen. Für die Abstandsmessung bzw. die Abstandsregelung wird die Sensorelektrode, beispielsweise in Form einer Bearbeitungsdüse, über der Auflagefläche positioniert.

Ein weiterer Aspekt der Erfindung betrifft ein Verfahren zum Bewegen mindestens eines Unterstützungsschlittens an einer Maschine der eingangs genannten Art, umfassend: Bewegen des mindestens einen Unterstützungsschlittens in der zweiten Richtung bei gleichzeitigem gesteuertem Verfahren der Auflagefläche des Unterstützungsschlittens an eine vorgegebene, insbesondere ortsunabhängige, konstante Position in Schwerkraftrichtung, die bevorzugt mit den beiden Werkstückauflageflächen fluchtet. Wie weiter oben beschrieben wurde, wird für die Durchführung des Verfahrens typischerweise eine Steuerungseinrichtung der Maschine verwendet.

Bei einer Variante erfolgt das gesteuerte Verfahren der Auflagefläche anhand eines vorab ermittelten Zusammenhangs zwischen einer Position der Auflagefläche in Schwerkraftrichtung und der Position des Unterstützungsschlittens in der zweiten Richtung. Der Zusammenhang, d.h. die Ist-Position in Z-Richtung der Auflagefläche ohne Kompensation kann in Form einer Kompensations-Kennlinie in einer Speichereinrichtung hinterlegt sein. Der Kompensations-Kennlinie ist der Betrag zu entnehmen, um den die Z-Position der Auflagefläche an einer jeweiligen Y-Position von einer Sollposition, insbesondere von einer konstanten Position auf Höhe der Werkstückauflageflächen, abweicht. Um diesen von der Y-Position abhängigen Betrag wird die Auflagefläche bzw. der Unterstützungsschlitten in Z-Richtung verfahren, um diese auf der Sollposition, insbesondere auf der konstanten Höhe, zu halten. Auf diese Weise kann die Höhe der Auflagefläche über den gesamten Verfahrbereich des Unterstützungsschlittens innerhalb des Spalts, d.h. praktisch über die gesamte Erstreckung des Spalts in Y-Richtung, konstant gehalten werden.

Die Ermittlung des Zusammenhangs zwischen der Y-Position eines Unterstützungsschlittens und der Z-Position von dessen Auflagefläche kann auf verschiedene Arten erfolgen, beispielsweise mit Hilfe eines taktilen oder optischen (z.B. Lichtschnitt-)Messsystems. Bei einer Variante des erfindungsgemäßen Verfahrens wird zum Ermitteln des Zusammenhangs der Unterstützungsschlitten in der zweiten Richtung synchron mit einer Sensorelektrode einer Abstandsmesseinrichtung verschoben, wobei die Sensorelektrode bevorzugt eine Bearbeitungsdüse des Bearbeitungskopfs bildet. Weist die Maschine zwei Unterstützungsschlitten auf, werden beide Unterstützungsschlitten nacheinander entlang des gesamten Verfahrbereichs in der zweiten Richtung (Y-Richtung) bewegt. Zuvor wird der Bearbeitungskopf über jeweils einem der Unterstützungsschlitten bzw. der Auflagefläche des Unterstützungsschlittens positioniert.

Bei einer weiteren Variante wird beim synchronen Verschieben die Sensorelektrode über einem metallischen Teilbereich der Auflagefläche des Unterstützungsschlittens positioniert. Bei dieser Variante wird die Sensorelektrode, beispielsweise in Form der Bearbeitungsdüse, typischerweise in einer mittigen Position über einem metallischen, nicht mit einer Bürstenauflage versehenen Teilbereich der Auflagefläche positioniert. Dies ist günstig bzw. erforderlich, um den Abstand zwischen der Sensorelektrode und der Auflagefläche möglichst präzise zu bestimmen. Der metallische Teilbereich kann beispielsweise aus Kupfer gebildet sein.

Während der Laserbearbeitung ist es ideal, wenn sich der metallische Teilbereich des/der Unterstützungsschlitten bzw. dessen höchster Punkt einige Zehntel Millimeter unter der Unterseite des Werkstücks befindet. Auf diese Weise kommt es nicht zu einem Verkratzen des Werkstücks an der Unterseite oder zu einer Verschmutzung des zwischen der Werkstückunterseite und der Auflagefläche des Schlittens gebildeten Spalts und gleichzeitig werden das Werkstück bzw. freigeschnittene Werkstückteile gut unterstützt. Im Sinne dieser Anmeldung wird unter der Position der Auflagefläche, die mit den beiden Werkstückauflageflächen fluchtet, die hier beschriebene Position der Auflagefläche in Z-Richtung verstanden. Unter einer konstanten Position in Z-Richtung wird verstanden, dass die Z-Position über den gesamten Verfahrbereich in Y-Richtung um nicht mehr als 0,3 mm variiert.

Bei einer Weiterbildung wird beim synchronen Verschieben ein Abstand zwischen der Auflagefläche und der oberhalb der Auflagefläche positionierten Sensorelektrode auf einen konstanten Wert, bevorzugt weniger als 1,0 mm, geregelt und während des synchronen Verschiebens wird eine Position der Sensorelektrode in Schwerkraftrichtung aufgezeichnet. In diesem Fall dient die Abstandsmesseinrichtung zur Regelung des Abstands zwischen der Sensorelektrode und der Auflagefläche. Mittels der Abstandsmesseinrichtung kann der Abstand zwischen der Bearbeitungsdüse des Bearbeitungskopfs und der Auflagefläche des Unterstützungsschlittens, insbesondere des metallischen Teilbereichs, auf einen Wert von weniger als 20 mm, vorzugsweise auf einen Wert von weniger als 5 mm eingestellt werden. Besonders bevorzugt wird der Abstand auf einen Wert von weniger als 1 mm - und in der Regel von nicht weniger als 0,5 mm - eingestellt bzw. geregelt, da dies dem Abstand während der Werkstückbearbeitung entspricht.

Bei der parallelen Bewegung des Bearbeitungskopfs, an dem die Bearbeitungsdüse angebracht ist, und des Unterstützungsschlittens in der zweiten Richtung wird die Achsbewegung eines Linearmotors, durch die die Z-Position des Bearbeitungskopfs eingestellt wird, aufgezeichnet. Aufgrund des konstanten Abstands der Bearbeitungsdüse zur Auflagefläche entspricht diese Achsbewegung dem gesuchten Zusammenhang zwischen der Z-Position der Auflagefläche und der Y-Position des Unterstützungsschlittens. Daher wird auf diese Weise eine Kompensationskennlinie erhalten, mit deren Hilfe bei der Bearbeitung des Werkstücks die Z-Position des Unterstützungsschlittens und somit der Auflagefläche auf festgelegte Zielpositionen, insbesondere auf die entlang des Verfahrbereichs konstante Höhe, die der Höhe der Werkstückauflageflächen entspricht, gesteuert eingestellt werden kann.

Bei einer alternativen Variante wird beim synchronen Verschieben eine Position der Sensorelektrode in Schwerkraftrichtung konstant gehalten und es wird ein Abstand zwischen der Sensorelektrode und der Auflagefläche aufgezeichnet. Bei dieser Variante bleibt beim synchronen Verschieben des Bearbeitungskopfs bzw. der Sensorelektrode und des Unterstützungsschlittens die Z-Position der Sensorelektrode unverändert und das von der Abstandsmesseinrichtung gemessene Abstandssignal wird aufgezeichnet. Aus der Änderung des Abstandssignals in Abhängigkeit von der Y-Position entlang des Spalts kann ebenfalls die Kompensationskennlinie ermittelt werden.

Die Aufnahme der Kompensationskennlinie bzw. des Zusammenhangs zwischen der Z-Position und der Y-Position des Unterstützungsschlittens kann bei der Inbetriebnahme der Maschine erfolgen, beim Tausch einer Maschinenkomponente (z.B. des Bearbeitungskopfs) oder beim Auftreten eines Schneidproblems (z.B. nach einer Kollision des Bearbeitungskopfs mit einem verkippten Werkstückteil).

Zur weiteren Verbesserung der Genauigkeit kann mit Hilfe der Abstandmesseinrichtung die gesamte Auflagefläche des Unterstützungsschlittens oder die Oberfläche des metallischen Teilbereichs der Auflagefläche vermessen werden, um diese waagerecht auszurichten und Unebenheiten der Auflagefläche bzw. des metallischen Teilbereichs zu bestimmen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Maschine zur Laserbearbeitung mit zwei fest stehenden Werkstückauflageflächen, zwischen denen ein sich in Y-Richtung erstreckender Spalt mit zwei verfahrbaren Unterstützungsschlitten gebildet ist,
- Fig. 2: eine schematische Darstellung einer Abstandsmesseinrichtung zur Bestimmung bzw. Regelung eines Abstands zwischen einer Bearbeitungsdüse und einer Auflagefläche eines jeweiligen Unterstützungsschlittens, sowie
- Fig. 3: eine schematische Darstellung eines mittels der Abstandsmesseinrichtung ermittelten Zusammenhangs zwischen der Z-Position und der Y-Position des Unterstützungsschlittens bei der Bewegung in Y-Richtung innerhalb des Spalts.

In der folgenden Beschreibung der Zeichnungen werden für gleiche bzw. funktionsgleiche Bauteile identische Bezugszeichen verwendet.

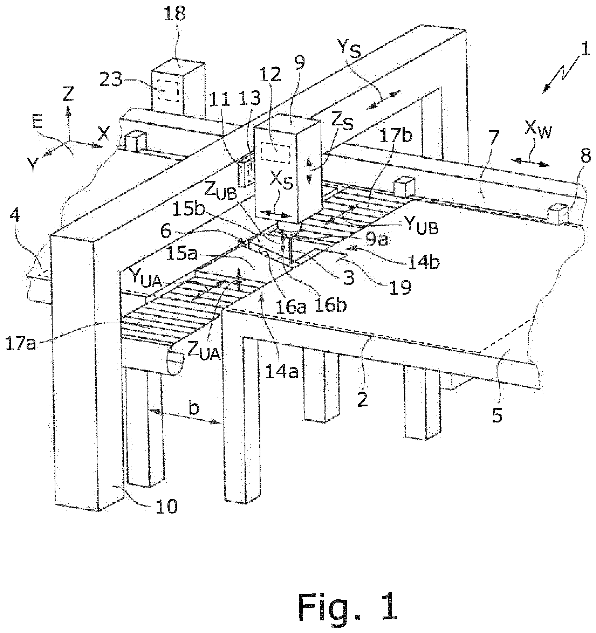

Fig. 1 zeigt einen beispielhaften Aufbau einer Maschine 1 zur Laserbearbeitung, genauer gesagt zum Laserschneiden, eines gestrichelt dargestellten plattenförmigen Werkstücks 2 mittels eines Bearbeitungsstrahls in Form eines Laserstrahls 3. Zur schneidenden Bearbeitung des Werkstücks 2 kann an Stelle des Laserstrahls 3 auch eine andere Art von thermischem Bearbeitungsstrahl, beispielsweise eine Plasmafackel, oder ein Wasserstrahl eingesetzt werden.

Das Werkstück 2 liegt bei der Bearbeitung auf zwei fest stehenden Werkstückauflageflächen 4, 5 auf, die im gezeigten Beispiel die Oberseiten von zwei Werkstücktischen bilden und die eine Werkstück-Lagerungsebene E (X-Y-Ebene eines XYZ-Koordinatensystems) zur Auflage des Werkstücks 2 definieren. Mittels einer herkömmlichen Bewegungs- und Halteeinrichtung 7, welche einen Antrieb sowie Klemmeinrichtungen 8 in Form von Spannpratzen zum Festhalten des Werkstücks 2 aufweist, kann das Werkstück 2 auf den Werkstückauflageflächen 4, 5 in einer ersten Richtung X (im Folgenden: X-Richtung) gesteuert verschoben und an eine vorgegebene Werkstückposition Xw bewegt werden. Um die Bewegung des Werkstücks 2 in X-Richtung zu erleichtern, können auf den in Fig. 1 gezeigten Werkstücktischen Bürsten, Kugeln oder Gleitrollen angebracht sein, die die eigentlichen Werkstückauflageflächen 4, 5 darstellen.

Zwischen den beiden fest stehenden Werkstückauflageflächen 4, 5 ist ein Spalt 6 gebildet, der seitlich von den fest stehenden Werkstückauflageflächen 4, 5 begrenzt wird. Der Spalt 6 erstreckt sich in einer zweiten Richtung (im Folgenden: Y-Richtung) über die gesamte Breite der beiden Werkstückauflageflächen 4, 5. Ein Laserschneidkopf 9, der den Laserstrahl 3 auf das Werkstück 2 ausrichtet und fokussiert, ist mittels eines als Bewegungseinrichtung dienenden motorisch angetriebenen Schlittens 11, der an einem fest stehenden Portal 10 geführt ist, in Y-Richtung gesteuert verfahrbar. Der Laserschneidkopf 9 ist im gezeigten Beispiel zusätzlich auch in X-Richtung verfahrbar und kann mit Hilfe einer an dem Schlitten 11 angebrachten zusätzlichen Bewegungseinrichtung 12, beispielsweise in Form eines Linearantriebs, in X-Richtung gesteuert verfahren werden.

Mit Hilfe der aufeinander aufbauenden Bewegungseinrichtungen 11, 12 kann der Laserschneidkopf 9 sowohl in X-Richtung als auch in Y-Richtung an einer gewünschten Schneidkopfposition Xs, Ys innerhalb des Spalts 6 positioniert werden. Zusätzlich kann der Laserschneidkopf 9 im gezeigten Beispiel mittels einer dritten Bewegungseinrichtung 13, beispielsweise in Form eines Linearantriebs, die auf die erste Bewegungseinrichtung 11 aufbaut, entlang einer dritten Bewegungsrichtung Z (Schwerkraftrichtung, im Folgenden: Z-Richtung) bewegt werden, um den Abstand zwischen einer Bearbeitungsdüse **9a** des Laserschneidkopfs 9 und der Oberfläche des Werkstücks 2 einzustellen bzw. um den Laserschneidkopf 9 an einer gewünschten Schneidkopfposition Zs in Z-Richtung relativ zur Werkstück-Lagerungsebene E zu positionieren.

Die gesteuerte Bewegung der Maschinenkomponenten erfolgt dabei jeweils sowohl in positive als auch in negative X-, Y- bzw. Z-Richtung.

In dem in Fig. 1 gezeigten Spalt 6 sind zur zusätzlichen Unterstützung des Werkstücks 2 und zur Unterstützung von beim trennenden Bearbeiten geschnittenen Werkstückteilen zwei Unterstützungsschlitten **14a, 14b** angeordnet. Die beiden Unterstützungsschlitten 14a, 14b erstrecken sich jeweils über die gesamte Breite b des Spalts 6 und sind in dem Spalt 6 in positive und negative Y-Richtung gesteuert und unabhängig voneinander verfahrbar. Die gesteuerte Bewegung der Unterstützungsschlitten 14a, 14b zwischen den Seitenkanten der fest stehenden Werkstückauflageflächen 4, 5 kann beispielsweise mit Hilfe von Spindelantrieben erfolgen, wobei die Spindelmutter an dem jeweiligen Unterstützungsschlitten 14a, 14b angebracht ist und die Spindel sowie der Antriebsmotor an einer der beiden fest stehenden Werkstückauflagen 4, 5 angebracht sind. Es versteht sich, dass die gesteuerte Bewegung der Unterstützungsschlitten 14a, 14b auch auf andere Weise realisiert werden kann.

Die Unterstützungsschlitten 14a, 14b können in dem Spalt 6 jeweils an eine gewünschte Position **Y_{UA}**, **Y_{UB}** entlang der zweiten Richtung Y bewegt werden, um dort das Werkstück 2 sowie von dem Werkstück 2 freizuschneidende bzw. beim Bearbeiten freigeschnittene Werkstückteile mittels einer an dem jeweiligen Unterstützungsschlitten 14a, 14b angebrachten Auflagefläche **15a, 15b** zu unterstützen.

Um Werkstückteile, die zungenförmige Teilbereiche aufweisen, die sich in X-Richtung oder in Y-Richtung erstrecken, besser zu unterstützen, sind bei dem in Fig. 1 gezeigten Beispiel die beiden einander zugewandten, parallel ausgerichteten seitlichen Kanten **16a, 16b** der Auflageflächen 15a, 15b der beiden Unterstützungsschlitten 14a, 14b schräg, d.h. unter einem Winkel sowohl zur X-Richtung als auch zur Y-Richtung, ausgerichtet.

Bei dem in Fig. 1 gezeigten Beispiel ist an den in X-Richtung verlaufenden, voneinander abgewandten Seitenkanten der Auflageflächen 15a, 15b der Unterstützungsschlitten 14a, 14b jeweils ein Überdeckungselement **17a, 17b** zur Abdeckung des Spalts 6 zwischen den beiden Werkstückauflageflächen 4, 5 angebracht. Die Überdeckungselemente 16a, 16b erstrecken sich über die gesamte Breite b des Spalts 6, werden beim Bewegen der Unterstützungsschlitten 14a, 14b in Y-Richtung mitbewegt und sind im gezeigten Beispiel rolladenförmig ausgebildet.

Im gezeigten Beispiel sind die Unterstützungsschlitten 14a, 14b höhenverstellbar bzw. in Z-Richtung verfahrbar ausgebildet, d.h. diese können - wie in Fig. 1 durch Pfeile angedeutet ist - aus einer jeweiligen Position **Z_{UA}** = 0, **Z_{UB}** = 0 in Z-Richtung, in welcher die Auflageflächen 15a, 15b sich auf der Höhe der Werkstückauflageflächen 4, 5 befinden bzw. mit diesen fluchten, in eine abgesenkte Stellung bewegt oder über die Werkstückauflageflächen 4, 5 nach oben angehoben werden.

Zur Steuerung der schneidenden Bearbeitung weist die Maschine 1 eine Steuerungseinrichtung 18, typischerweise in Form einer CNC-Steuerung auf, die zur Koordinierung der Bewegungen des Werkstücks 2, des Laserschneidkopfs 9 sowie der Unterstützungsschlitten 14a, 14b dient, um eine gewünschte Werkstückposition Xw, eine gewünschte Schneidkopfposition Xs, Ys, Zs sowie eine gewünschte Position Y_{UA}, Z_{UA}; Y_{UB}, Z_{UB} der Unterstützungsschlitten 14a, 14b einzustellen, um das Schneiden einer vorgegebenen Schnittkontur 19 zu ermöglichen und das Werkstück 2 ausreichend zu unterstützen. Die Steuerungseinrichtung 18 kann beispielsweise auf der CNC-Steuerung Siemens SINUMERIK 840D basieren.

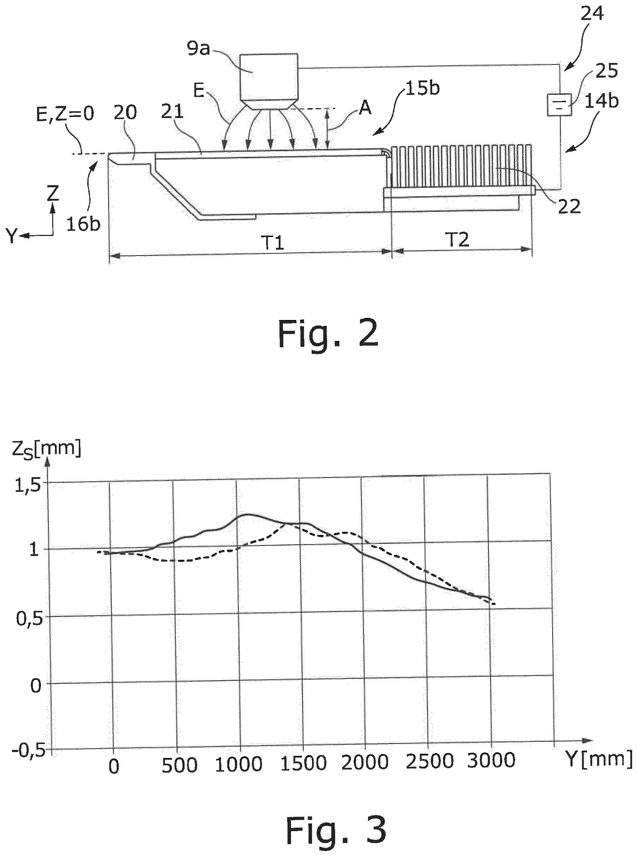

**Fig.** 2 zeigt den zweiten Unterstützungsschlitten 14b in einer Seitenansicht. Bei dem in Fig. 2 gezeigten Beispiel ist die Auflagefläche 15b des zweiten Unterstützungsschlittens 14b zweigeteilt und weist einen ersten, plattenförmigen Teilbereich **T1** auf, an dem die Seitenkante 16b gebildet ist und welcher einen oberen Abschnitt eines Kupferblechs **20** bildet. An den plattenförmigen ersten Teilbereich T1 schließt sich in Y-Richtung unmittelbar ein zweiter Teilbereich **T2** der Auflagefläche 15b an, der als Bürstenauflage **22** ausgebildet ist und der eine Mehrzahl von Bürsten aufweist, die flexibel sind und die ein Gleiten von auf der Auflagefläche 15b aufliegenden Werkstücken 2 erleichtern. Im hier beschriebenen Beispiel ist auch der erste Unterstützungsschlitten 13a auf die in Fig. 2 gezeigte Weise ausgebildet.

Die Auflagefläche 15a, 15b eines jeweiligen Unterstützungsschlittens 14a, 14b soll bei der Bewegung des jeweiligen Unterstützungsschlittens 14a, 14b in Y-Richtung entlang des Spalts 6 mit den Werkstückauflageflächen 4, 5 fluchten, d.h. die Positionen Z_{UA}, Z_{UB} der Auflageflächen 15a, 15b der Unterstützungsschlitten 14a, 14b sollen sich auf Höhe der Lagerungsebene E für das Werkstück 2 befinden, die (willkürlich) als Koordinaten-Ursprung (Z = 0) in Z-Richtung festgelegt wurde. Bei der Bewegung der Unterstützungsschlitten 14a, 14b in Y-Richtung entlang des Spalts 6 verändern sich jedoch die jeweiligen Positionen Z_{UA}, Z_{UB} der Unterstützungsschlitten 14a, 14b und somit auch der Auflageflächen 15a, 15b in Z-Richtung. Die jeweilige Position Z_{UA}, Z_{UB} in Z-Richtung ist hierbei von der Position Y_{UA}, Y_{UB} des Unterstützungsschlittens 14a, 14b in Y-Richtung abhängig, da ein ortsabhängiger Parallelitätsfehler durch Summierung mechanischer Toleranzen auftritt.

Um zu erreichen, dass die beiden Unterstützungsschlitten 14a, 14b während der Verfahrbewegung entlang des Spalts 6 stets mit den Werkstückauflageflächen 4, 5 fluchten, wird der Bewegung der Unterstützungsschlitten 14a, 14b in Y-Richtung eine Verfahrbewegung in Z-Richtung überlagert. Die Bewegung der beiden Unterstützungsschlitten 14a, 14b in Z-Richtung wird mit Hilfe der Steuerungseinrichtung 18 so gesteuert, das deren Auflageflächen 15a, 15b stets - d.h. unabhängig von der jeweiligen Position Y_{UA}, Y_{UB} der Unterstützungsschlitten 14a, 14b in Y-Richtung - an einer konstanten Position Z_{UA} = 0, Z_{UB} = 0 angeordnet sind, die mit der Werkstücklagerungs-Ebene E übereinstimmt. Es ist allerdings auch möglich, die Auflageflächen 15a, 15b in Abhängigkeit von der jeweiligen Position Y_{UA}, Y_{UB} der Unterstützungsschlitten 14a, 14b in Y-Richtung gesteuert auf unterschiedlichen vorgegebenen Positionen Z_{UA}, Z_{UB} anzuordnen, beispielsweise dann, wenn auch die fest stehenden Werkstückauflageflächen 4, 5 eine Positionstoleranz in Z-Richtung aufweisen.

Zu diesem Zweck greift die Steuerungseinrichtung 18 auf einen vorab ermittelten Zusammenhang (Kennlinie) zwischen der Position Z_{UA}, Z_{UB} in Z-Richtung einer jeweiligen Auflagefläche 15a, 15b eines der Unterstützungsschlitten 14a, 14b und der Position Y_{UA}, Y_{UB} dieses Unterstützungsschlittens 14a, 14b in Y-Richtung sowie ggf. der Position in Z-Richtung der Werkstückauflageflächen 4, 5 zurück, der in einer Speichereinrichtung 23 gespeichert ist (vgl. Fig. 1). Dieser Zusammenhang wurde ermittelt, ohne dass eine gesteuerte Bewegung der jeweiligen Unterstützungsschlitten 14a, 14b in Z-Richtung erfolgt, d.h. für den Fall, dass die Steuerungseinrichtung 18 lediglich eine Bewegung der Unterstützungsschlitten 14a, 14b in Y-Richtung vornimmt.

Um den vorgegebenen Zusammenhang zu ermitteln, wird beispielsweise eine in Fig. 2 gezeigte Abstandsmesseinrichtung **24** verwendet. Die Abstandsmesseinrichtung 24 weist eine Spannungsquelle **25** auf, um zwischen der metallischen Bearbeitungsdüse 9a des Bearbeitungskopfs 9, die als Sensorelektrode dient, und der Auflagefläche 15b, genauer gesagt dem metallischen Teilbereich T1 des zweiten Unterstützungsschlittens 14b, eine Spannung anzulegen. Zu diesem Zweck wird der zweite Unterstützungsschlitten 14b an einem metallischen Abschnitt seines Grundkörpers, der mit dem metallischen Teilbereich T1 der Auflagefläche 15b in Kontakt steht, elektrisch kontaktiert und steht mit der Spannungsquelle 25 in elektrisch leitender Verbindung. Gleiches gilt für die Bearbeitungsdüse 9a. Zwischen der Bearbeitungsdüse 9a und der Auflagefläche 15b bildet sich ein elektrisches Feld E aus, dessen Feldlinien in Fig. 2 dargestellt sind.

In Abhängigkeit vom Abstand A zwischen dem unteren Ende der Bearbeitungsdüse 9a und der Auflagefläche 15b verändert sich die Lage bzw. die Länge der Feldlinien des elektrischen Feldes E und somit die Kapazität zwischen der Bearbeitungsdüse 9a und der Auflagefläche 15b. Mit Hilfe eines nicht bildlich dargestellten Schwingkreises der Abstandsmesseinrichtung kann die Veränderung der vom Abstand A abhängigen Kapazität anhand einer Veränderung der Frequenz des Schwingkreises bestimmt werden. Der Zusammenhang zwischen der Frequenz des Schwingkreises der Abstandsmesseinrichtung 24 und dem Abstand A wird durch eine Kennlinie beschrieben, die vorab bei einer Kalibrationsmessung aufgenommen wurde.

Um den oben beschriebenen Zusammenhang zwischen der Z-Position Z_{UA}, Z_{UB} eines jeweiligen Unterstützungsschlittens 14a, 14b bzw. der Auflagefläche 15a, 15b in Abhängigkeit von der Y-Position Y_{UA}, Y_{UB} des Unterstützungsschlittens 14a, 14b in dem Spalt 6 zu ermitteln, werden beide Unterstützungsschlitten 14a, 14b nacheinander entlang des gesamten Verfahrbereichs in Y-Richtung innerhalb des Spalts 6 bewegt. Zuvor wird der Laserbearbeitungskopf 9 bzw. die Bearbeitungsdüse 9a über jeweils einem der Unterstützungsschlitten 14a, 14b positioniert, beispielsweise in einer mittigen Position über dem nicht-bebürsteten Teilbereich T1 der Auflagefläche 15b aus Kupfer des zweiten Unterstützungsschlittens 14b (vgl. Fig. 2). Anschließend werden der zweite Unterstützungsschlitten 14b und der Laserbearbeitungskopf 15b parallel entlang des Spalts 6 über den gesamten Verfahrbereich des zweiten Unterstützungsschlittens 14b verfahren.

Mittels der Abstandsmesseinrichtung 24 wird hierbei der Abstand A zwischen der Bearbeitungsdüse 9a des Laserbearbeitungskopfs 9 und der Auflagefläche 15b auf einen konstanten Wert von weniger als 20 mm, vorzugsweise auf einen Wert von weniger als 5 mm geregelt und die Achsbewegung des Linearmotors, durch die die Z-Position Zs des Laserbearbeitungskopfs 9 eingestellt wird, aufgezeichnet. Besonders bevorzugt wird der Abstand A auf einen konstanten Wert zwischen 0,5 mm und 1 mm geregelt, da dies dem typischen Abstand A während der Werkstückbearbeitung entspricht.

Die hierbei aufgenommene Z-Position Zs des Bearbeitungskopfs 9 in Abhängigkeit von der Y-Position Y_{UB} des zweiten Unterstützungsschlittens 14b bzw. von der Y-Position in dem Spalt 6 ist in **Fig.** 3 mit einer durchgezogenen Linie dargestellt. Für die Ermittlung der Z-Position Z_{UB} der Auflagefläche 14b des zweiten Unterstützungsschlittens 14b in Z-Richtung wird von der jeweiligen Position Zs der Bearbeitungsdüse 9a der konstante Abstand A, z.B. 1 mm, subtrahiert. Der in Fig. 3 gezeigte Zusammenhang wird in Form einer Kennlinie in der Speichereinrichtung 23 hinterlegt.

Entsprechend wird auch der erste Unterstützungsschlitten 14a über den gesamten Verfahrweg in Y-Richtung, d.h. von Y = 0 mm am linken Rand des Spalts 6 bis Y = 3000 mm am rechten Rand des Spalts 6 verfahren und die in Fig. 3 gestrichelt dargestellte Z-Position Zs des Bearbeitungskopfs 9 bzw. der Bearbeitungsdüse 9a in Abhängigkeit von der Y-Position Y_{UA} des Unterstützungsschlittens 14a aufgenommen und in der Speichereinrichtung 23 in Form einer weiteren Kennlinie hinterlegt.

Alternativ zur Ermittlung der Kennlinie auf die oben beschriebene Weise kann beim synchronen Verschieben die Z-Position Zs des Bearbeitungskopfs 9 bzw. der Bearbeitungsdüse 9a konstant gehalten werden und der von der Y-Position Y_{UA}, Y_{UB} des jeweiligen Unterstützungsschlittens 14a, 14b abhängige Abstand A zwischen der Bearbeitungsdüse 9a und der jeweiligen Auflagefläche 15a, 15b bzw. ein von der Abstandsmesseinrichtung 24 erzeugtes Abstands-Signal wird aufgezeichnet.

Die Aufnahme der Kompensations-Kennlinie kann bei der Inbetriebnahme der Maschine 1 erfolgen, beim Tausch einer Maschinenkomponente (z.B. des Laserbearbeitungskopfs 9) oder beim Auftreten eines Schneidproblems (z.B. nach einer Kollision des Bearbeitungskopfs 9 mit einem verkippten Werkstückteil). Zur weiteren Verbesserung der Genauigkeit kann mit Hilfe der Abstandsmesseinrichtung 24 die gesamte Auflagefläche 15a, 15b des jeweiligen Unterstützungsschlittens 14a, 14b oder lediglich die Oberfläche des metallischen Teilbereichs T1 durch Bewegen des Schneidkopfs 9 bzw. der Bearbeitungsdüse 9a über die Oberfläche vermessen werden, um diese waagerecht auszurichten und Unebenheiten der Auflagefläche 15a, 15b zu bestimmen.

Während der Laserbearbeitung ist es ideal, wenn sich der metallische Teilbereich T1 der Unterstützungsschlitten 14a, 14b bzw. dessen höchster Punkt einige Zehntel Millimeter unter der Unterseite des Werkstücks 2 befindet. In diesem Fall liegen die Oberseiten der Borsten der Bürstenauflage 22 an der Unterseite des Werkstücks 2 an und es kommt nicht zu einem Verkratzen des Werkstücks 2 an seiner Unterseite oder zu einer Verschmutzung des zwischen der Unterseite des Werkstücks 2 und der Auflagefläche 15a, 15b des Unterstützungsschlittens 15a, 15b gebildeten Spalts. Gleichzeitig werden das Werkstück 2 bzw. freigeschnittene Werkstückteile gut von den Unterstützungsschlitten 14a, 14b unterstützt.

## Patentansprüche

1. Maschine (1) zum trennenden Bearbeiten eines plattenförmigen Werkstücks (2) mittels eines Bearbeitungsstrahls (3), mit:
einer ersten Bewegungseinrichtung (7) zur Bewegung des Werkstücks (2) in einer ersten Richtung (X),
einer zweiten Bewegungseinrichtung (11) zur Bewegung eines den Bearbeitungsstrahl (3) auf das Werkstück (2) ausrichtenden Bearbeitungskopfs (9) in einer zweiten, zur ersten senkrechten Richtung (Y),
zwei Werkstückauflageflächen (4, 5) zur Auflage des Werkstücks (2), zwischen denen ein sich entlang der zweiten Richtung (Y) erstreckender Spalt (6) gebildet ist,
wobei innerhalb des Spalts (6) mindestens ein, bevorzugt mindestens zwei in der zweiten Richtung (Y) verfahrbare Unterstützungsschlitten (14a, 14b) mit einer Auflagefläche (15a, 15b) zur Unterstützung von beim trennenden Bearbeiten geschnittenen Werkstücken (2) angeordnet sind, wobei der mindestens eine Unterstützungsschlitten (14a, 14b) in Schwerkraftrichtung (Z) verfahrbar ist,
**gekennzeichnet durch**,
eine Steuerungseinrichtung (18), die ausgebildet ist, während der Bewegung des mindestens einen Unterstützungsschlittens (14a, 14b) in der zweiten Richtung (Y) die Auflagefläche (15a, 15b) des Unterstützungsschlittens (14a, 14b) gesteuert an eine vorgegebene, insbesondere ortsunabhängige Position (Z_{UA} = 0, Z_{UB} = 0) in Schwerkraftrichtung (Z) zu verfahren, an der die Auflagefläche (15a, 15b) bevorzugt mit den beiden Werkstückauflageflächen (4, 5) fluchtet, wobei die Steuerungseinrichtung (18) ausgebildet ist, das gesteuerte Verfahren der Auflagefläche (15a, 15b) anhand eines vorab ermittelten Zusammenhangs zwischen einer Position (Z_{UA}, Z_{UB}) der Auflagefläche (15a, 15b) in Schwerkraftrichtung (Z) und der Position (Y_{UA}, Y_{UB}) des Unterstützungsschlittens (14a, 14b) in der zweiten Richtung (Y) vorzunehmen.

2. Maschine nach Anspruch 1, weiter umfassend: eine Speichereinrichtung (23), in welcher der Zusammenhang zwischen der Position (Z_{UA}, Z_{UB}) der Auflagefläche (15a, 15b) in Schwerkraftrichtung (Z) und der Position (Y_{UA}, Y_{UB}) des Unterstützungsschlittens (14a, 14b) in der zweiten Richtung (Y) gespeichert ist.

3. Maschine nach Anspruch 1 oder 2, weiter umfassend: eine Abstandsmesseinrichtung (24) zur Bestimmung oder zur Regelung eines Abstands (A) zwischen einer Sensorelektrode (9a) und der Auflagefläche (15a, 15b) mindestens eines Unterstützungsschlittens (14a, 14b) in Schwerkraftrichtung (Z), wobei die Sensorelektrode bevorzugt eine Bearbeitungsdüse (9a) des Bearbeitungskopfs (9) bildet.

4. Verfahren zum Bewegen mindestens eines Unterstützungsschlittens (14a, 14b) an einer Maschine (1) nach dem Oberbegriff von Anspruch 1, **gekennzeichnet durch**:
Bewegen des mindestens einen Unterstützungsschlittens (14a, 14b) in der zweiten Richtung (Y) bei gleichzeitigem gesteuerten Verfahren der Auflagefläche (15a, 15b) des Unterstützungsschlittens (14a, 14b) an eine vorgegebene, insbesondere ortsunabhängige Position (Z_{UA} = 0, Z_{UB} = 0) in Schwerkraftrichtung (Z), die bevorzugt mit den beiden Werkstückauflageflächen (4, 5) fluchtet, wobei das gesteuerte Verfahren der Auflagefläche (15a, 15b) anhand eines vorab ermittelten Zusammenhangs zwischen einer Position (Z_{UA}, Z_{UB}) der Auflagefläche (15a, 15b) in Schwerkraftrichtung (Z) und der Position (Y_{UA}, Y_{UB}) des Unterstützungsschlittens (14a, 14b) in der zweiten Richtung (Y) erfolgt.

5. Verfahren nach Anspruch 4, bei dem zum Ermitteln des Zusammenhangs der Unterstützungsschlitten (14a, 14b) in der zweiten Richtung (Y) synchron mit einer Sensorelektrode (9a) einer Abstandsmesseinrichtung (24) verschoben wird, wobei die Sensorelektrode bevorzugt eine Bearbeitungsdüse (9a) des Bearbeitungskopfs (9) bildet.

6. Verfahren nach Anspruch 5, bei dem beim synchronen Verschieben die Sensorelektrode (9a) über einem metallischen Teilbereich (T1, T2) der Auflagefläche (15a, 15b) des Unterstützungsschlittens (14a, 14b) positioniert wird.

7. Verfahren nach Anspruch 4 oder 5, bei dem beim synchronen Verschieben ein Abstand (A) zwischen der Auflagefläche (15a, 15b) und der oberhalb der Auflagefläche (15a, 15b) positionierten Sensorelektrode (9a) auf einen konstanten Wert, bevorzugt von weniger als 1,0 mm, geregelt wird und während des synchronen Verschiebens eine Position (Zₛ) der Sensorelektrode (9a) in Schwerkraftrichtung (Z) aufgezeichnet wird.

8. Verfahren nach Anspruch 4 oder 5, bei dem beim synchronen Verschieben eine Position (Z_{B}) der Sensorelektrode (9a) in Schwerkraftrichtung (Z) konstant gehalten wird und ein Abstand (A) zwischen der Sensorelektrode (9a) und der Auflagefläche (15a, 15b) aufgezeichnet wird.

## Claims

1. Machine (1) for separatively machining a planar workpiece (2) by means of a machining beam (3), comprising:
a first movement device (7) for moving the workpiece (2) in a first direction (X),
a second movement device (11) for moving a machining head (9) which orients the machining beam (3) onto the workpiece (2) in a second direction (Y) perpendicular to the first direction,
two workpiece support surfaces (4, 5) for supporting the workpiece (2), between which a gap (6) extending along the second direction (Y) is formed,
at least one, preferably at least two support carriages (14a, 14b) which are movable in the second direction (Y) and have a support surface (15a, 15b) being arranged within the gap (6) for supporting workpieces (2) cut during separative machining, the at least one support carriage (14a, 14b) being movable in the direction of gravity (Z),
**characterized by**,
a control device (18) which, during the movement of the at least one support carriage (14a, 14b) in the second direction (Y), is designed to move the support surface (15a, 15b) of the support carriage (14a, 14b) in a controlled manner to a predefined, in particular location-independent position (Z_{UA} = 0, Z_{UB} = 0) in the direction of gravity (Z), at which the support surface (15a, 15b) is preferably aligned with the two workpiece support surfaces (4, 5), the control device (18) being designed to execute the controlled movement of the support surface (15a, 15b) on the basis of a previously determined relationship between a position (Z_{UA}, Z_{UB}) of the support surface (15a, 15b) in the direction of gravity (Z) and the position (Y_{UA}, Y_{UB}) of the support carriage (14a, 14b) in the second direction (Y).

2. Machine according to claim 1, further comprising: a storage device (23) in which the relationship between the position (Z_{UA}, Z_{UB}) of the support surface (15a, 15b) in the direction of gravity (Z) and the position (Y_{UA}, Y_{UB}) of the support carriage (14a, 14b) in the second direction (Y) is stored.

3. Machine according to either claim 1 or claim 2, further comprising: a distance measuring device (24) for determining or controlling a distance (A) between a sensor electrode (9a) and the support surface (15a, 15b) of at least one support carriage (14a, 14b) in the direction of gravity (Z), wherein the sensor electrode preferably forms a machining nozzle (9a) of the machining head (9).

4. Method for moving at least one support carriage (14a, 14b) on a machine (1) according to the preamble of claim 1, **characterized by**:
moving the at least one support carriage (14a, 14b) in the second direction (Y) while simultaneously moving the support surface (15a, 15b) of the support carriage (14a, 14b) in a controlled manner to a predefined, in particular location-independent position (Z_{UA} = 0, = 0) in the direction of gravity (Z), which is preferably aligned with the two workpiece support surfaces (4, 5), the controlled movement of the support surface (15a, 15b) being carried out on the basis of a previously determined relationship between a position (Z_{UA}, Z_{UB}) of the support surface (15a, 15b) in the direction of gravity (Z) and the position (Y_{UA}, Y_{UB}) of the support carriage (14a, 14b) in the second direction (Y).

5. Method according to claim 4, wherein, in order to determine the relationship, the support carriage (14a, 14b) is displaced in the second direction (Y) synchronously with a sensor electrode (9a) of a distance measuring device (24), wherein the sensor electrode preferably forms a machining nozzle (9a) of the machining head (9).

6. Method according to claim 5, wherein, during the synchronous displacement, the sensor electrode (9a) is positioned over a metal portion (T1, T2) of the support surface (15a, 15b) of the support carriage (14a, 14b).

7. Method according to either claim 4 or claim 5, wherein, during the synchronous displacement, a distance (A) between the support surface (15a, 15b) and the sensor electrode (9a) positioned above the support surface (15a, 15b) is controlled to a constant value, preferably less than 1.0 mm, and a position (Zₛ) of the sensor electrode (9a) in the direction of gravity (Z) is recorded during the synchronous displacement.

8. Method according to either claim 4 or claim 5, wherein, during the synchronous displacement, a position (Z_{B}) of the sensor electrode (9a) in the direction of gravity (Z) is kept constant and a distance (A) between the sensor electrode (9a) and the support surface (15a, 15b) is recorded.

## Revendications

1. Machine (1) dévolue à l'usinage séparatif d'une pièce (2) en forme de plaque, au moyen d'un faisceau d'usinage (3), comprenant :
un premier dispositif (7) de mise en mouvement, conçu pour mouvoir la pièce (2) dans une première direction (X),
un second dispositif (11) de mise en mouvement conçu pour mouvoir, dans une seconde direction (Y) perpendiculaire à la première, une tête d'usinage (9) qui aligne ledit faisceau d'usinage (3) sur ladite pièce (2),
deux surfaces (4, 5) destinées à supporter ladite pièce (2), entre lesquelles est réservé un interstice (6) s'étendant le long de la seconde direction (Y),
sachant qu'au moins un, de préférence au moins deux chariots de soutien (14a, 14b), déplaçable(s) dans ladite seconde direction (Y) et muni(s) d'une surface d'appui (15a, 15b) affectée au soutien de pièces (2) découpées lors de l'usinage séparatif, se trouve(nt) à l'intérieur dudit interstice (6), le chariot de soutien (14a, 14b) à présence minimale étant déplaçable dans la direction (Z) de la gravité,
**caractérisée par**
un dispositif de commande (18) réalisé en vue de déplacer, de manière commandée, la surface d'appui (15a, 15b) du chariot de soutien (14a, 14b) à présence minimale, au cours du mouvement dudit chariot de soutien (14a, 14b) à présence minimale dans la seconde direction (Y), vers un emplacement (Z_{UA} = 0, Z_{UB} = 0) préétabli, notamment indépendant de la localisation dans la direction (Z) de la gravité, auquel ladite surface d'appui (15a, 15b) coïncide préférentiellement avec les deux surfaces (4, 5) de support de la pièce, ledit dispositif de commande (18) étant réalisé en vue d'instaurer le déplacement commandé de la surface d'appui (15a, 15b) sur la base d'une corrélation, spécifiée au préalable, entre un emplacement (Z_{UA}, Z_{UB}) de ladite surface d'appui (15a, 15b), dans la direction (Z) de la gravité, et l'emplacement (Y_{UA}, Y_{UB}) du chariot de soutien (14a, 14b) dans la seconde direction (Y).

2. Machine selon la revendication 1, incluant en outre : un dispositif de mémorisation (23) dans lequel est mémorisée la corrélation entre l'emplacement (Z_{UA}, Z_{UB}) de la surface d'appui (15a, 15b), dans la direction (Z) de la gravité, et l'emplacement (Y_{UA}, Y_{UB}) du chariot de soutien (14a, 14b) dans la seconde direction (Y).

3. Machine selon la revendication 1 ou 2, incluant en outre : un dispositif (24) mesureur d'espacements, affecté à la détermination ou à la régulation d'une distance (A) entre une électrode de détection (9a) et la surface d'appui (15a, 15b) d'au moins un chariot de soutien (14a, 14b), dans la direction (Z) de la gravité, ladite électrode de détection formant, de préférence, une buse d'usinage (9a) de la tête d'usinage (9).

4. Procédé de mise en mouvement d'au moins un chariot de soutien (14a, 14b) sur une machine (1) conforme au préambule de la revendication 1, **caractérisé par** :
une mise en mouvement du chariot de soutien (14a, 14b) à présence minimale, dans la seconde direction (Y), avec déplacement commandé concomitant de la surface d'appui (15a, 15b) dudit chariot de soutien (14a, 14b) vers un emplacement (Z_{UA} = 0, Z_{UB} = 0) préétabli, notamment indépendant de la localisation dans la direction (Z) de la gravité, qui coïncide préférentiellement avec les deux surfaces (4, 5) de support de la pièce, le déplacement commandé de la surface d'appui (15a, 15b) ayant lieu sur la base d'une corrélation, spécifiée au préalable, entre un emplacement (Z_{UA}, Z_{UB}) de ladite surface d'appui (15a, 15b) dans la direction (Z) de la gravité et l'emplacement (Y_{UA}, Y_{UB}) du chariot de soutien (14a, 14b) dans la seconde direction (Y).

5. Procédé selon la revendication 4, dans lequel, pour spécifier la corrélation, le chariot de soutien (14a, 14b) est déplacé dans la seconde direction (Y) en synchronisme avec une électrode de détection (9a) d'un dispositif (24) mesureur d'espacements, laquelle électrode de détection forme, de préférence, une buse d'usinage (9a) de la tête d'usinage (9).

6. Procédé selon la revendication 5, dans lequel, lors du déplacement synchrone, l'électrode de détection (9a) est positionnée au-dessus d'une région partielle métallique (T1, T2) de la surface d'appui (15a, 15b) du chariot de soutien (14a, 14b).

7. Procédé selon la revendication 4 ou 5, dans lequel, lors du déplacement synchrone, une distance (A) entre la surface d'appui (15a, 15b) et l'électrode de détection (9a) positionnée au-dessus de ladite surface d'appui (15a, 15b) est régulée sur une valeur constante, préférentiellement inférieure à 1,0 mm, et un emplacement (Zs) de ladite électrode de détection (9a) dans la direction (Z) de la gravité est consigné au cours dudit déplacement synchrone.

8. Procédé selon la revendication 4 ou 5, dans lequel, lors du déplacement synchrone, un emplacement (Z_{B}) de l'électrode de détection (9a) dans la direction (Z) de la gravité est maintenu constant, et une distance (A) entre ladite électrode de détection (9a) et la surface d'appui (15a, 15b) est consignée.
